# EUROPEAN PATENT SPECIFICATION

(11) **EP 3 778 837 B1**
(45) Date of publication and mention of the grant of the patent: **17.01.2024**
(21) Application number: 20191100.5
(22) Date of filing: 24.02.2017
(51) Int. Cl.: C10M 129/38, C10M 139/00

(54) **USE OF LUBRICANT COMPOSITIONS FOR DIRECT INJECTION ENGINES**
VERWENDUNG VON SCHMIERMITTELZUSAMMENSETZUNGEN FÜR DIREKTEINSPRITZMOTOREN
UTILISATION DES COMPOSITIONS LUBRIFIANTES POUR MOTEURS À INJECTION DIRECTE

(30) Priority: 24.02.2016 US 201662299166 P
(43) Date of publication of application: 17.02.2021
(62) Divisional of application: 17710090.6
(73) Proprietor: The Lubrizol Corporation, Wickliffe, OH 44092-2298 (US)
(72) Inventor: GIESELMAN, Matthew D., Wickliffe OH 44092-2298 (US); DOHNER, Brent R., Wickliffe OH 44092-2298 (US); MIYOSHI, Kazayoshi, Tokyo 153-0064 (JP); SAMMUT, Alexander, Wickliffe OH 44092-2298 (US); MOSIER, Patrick E., Wickliffe OH 44092-2298 (US)
(74) Representative: D Young & Co LLP

(56) References cited:
- WO-A1-2017/011689
- US-A1- 2015 307 802

## Description

### BACKGROUND OF THE INVENTION

The disclosed technology relates to the use of an oil-soluble titanium carboxylate for reducing low speed pre-ignition events in spark-ignited direct injection engines as defined in Claim 1.

Modern engine designs are being developed to improve fuel economy without sacrificing performance or durability. Historically, gasoline was port-fuel injected (PFI), that is, injected through the air intake and entering the combustion chamber via the air intake valve. Gasoline direct injection (GDI) involves direct injection of gasoline into the combustion chamber.

In certain situations, the internal combustion engine may exhibit abnormal combustion. Abnormal combustion in a spark-initiated internal combustion engine may be understood as an uncontrolled explosion occurring in the combustion chamber as a result of ignition of combustible elements therein by a source other than the igniter.

Pre-ignition may be understood as an abnormal form of combustion resulting from ignition of the air-fuel mixture prior to ignition by the spark ignition source. Anytime the air-fuel mixture in the combustion chamber is ignited prior to ignition by the spark ignition source, such may be understood as pre-ignition. It will also be understood that ignition events generally increase in likelihood as the air-fuel ratio becomes leaner. As such, one approach to preventing pre-ignition events in GDI engines has been to intentionally inject additional fuel (i.e., to overfuel), thereby adjusting the air-fuel ratio to a richer mixture that is less favorable to pre-ignition events. This approach has successfully treated LSPI, but more current fuel efficiency and economy standards are causing engine manufactures to adopt leaner air-fuel mixtures, which leads to the need for alternative approaches to preventing or reducing LSPI events.

Without being bound to a particular theory, traditionally, pre-ignition has occurred during high speed operation of an engine when a particular point within the combustion chamber of a cylinder may become hot enough during high speed operation of the engine to effectively function as a glow plug (e.g. overheated spark plug tip, overheated burr of metal) to provide a source of ignition which causes the air-fuel mixture to ignite before ignition by the igniter. Such pre-ignition may be more commonly referred to as hot-spot pre-ignition, and may be inhibited by simply locating the hot spot and eliminating it.

More recently, vehicle manufacturers have observed intermittent abnormal combustion in their production of turbocharged gasoline engines, particularly at low speeds and medium-to-high loads. More particularly, when operating the engine at speeds less than or equal to 3,000 rpm and under a load with a brake mean effective pressure (BMEP) of greater than or equal to 10 bars, a condition which may be referred to as low-speed pre-ignition (LSPI) may occur in a very random and stochastic fashion.

US 2015/307802 discloses a method of preventing or reducing the occurrence of LSPI in a direct-injected, boosted, spark-ignited internal combustion engine that, in operation, generates a brake mean effective pressure level of greater than about 15 bar, at an engine speed of from about 1500 to about 2500 rotations per minute (rpm), in which the crankcase of the engine is lubricated with a lubricating oil composition containing at least about 0.2 mass % of magnesium sulfated ash.

The disclosed technology provides the use of an oil soluble titanium carboxylate for reducing LSPI events in a spark-ignited direct injection internal combustion engine.

### SUMMARY OF THE INVENTION

The disclosed technology providesthe use of an oil soluble titanium carboxylate compound for reducing low speed pre-ignition events in a spark-ignited direct injection internal combustion engine as defined in Claim 1. The engine is operated under a load with a brake mean effective pressure (BMEP) of greater than or equal to 10 bars and at speeds less than or equal to 3,000 rpm, wherein the oil-soluble titanium carboxylate is present in a lubricant composition comprising a base oil of lubricating viscosity, and wherein the lubricant composition further comprises a polyalkenyl succinimide dispersant in an amount from 0.5 to 4 weight % of the composition.

According to an embodiment of the use , the titanium carboxylate is selected from the group consisting of titanium citrate, titanium oleate, titanium neodecanoate and blends thereof.

The invention further provides the use disclosed herein in which the engine is fueled with a liquid hydrocarbon fuel, a liquid non-hydrocarbon fuel, or mixtures thereof.

The invention further provides the use disclosed herein in which the engine is fueled by natural gas, liquefied petroleum gas (LPG), compressed natural gas (CNG), or mixtures thereof.

The invention further provides the use disclosed herein in which the lubricant composition further comprises at least one other additive selected from an ashless dispersant, a metal containing overbased detergent, a phosphorus-containing antiwear additive, a friction modifier, and a polymeric viscosity modifier.

The invention further provides the use disclosed herein in which the lubricating composition comprises at least 50 weight % of a Group II base oil, a Group III base oil, or mixtures thereof.

The invention further provides the use disclosed herein in which there is a reduction in the number of LSPI events of at least 10 percent.

The invention further provides the use disclosed herein in which the low speed pre-ignition events are reduced to less than 20 LSPI events per 100,000 combustion events.

### DETAILED DESCRIPTION

Various preferred features and embodiments will be described below by way of non-limiting illustration.

As indicated above, when operating the engine at speeds less than or equal to 3,000 rpm and under a load with a brake mean effective pressure (BMEP) of greater than or equal to 10 bars, a low-speed pre-ignition (LSPI) event may occur in the engine. A LSPI event may consist of one or more LSPI combustion cycles, and generally consists of multiple LSPI combustion cycles which occur in a consecutive fashion or alternating fashion with normal combustion cycles in between. Without being bound to a particular theory, LSPI may result from a combustion of oil droplet(s), or a droplet(s) of oil-fuel mixture, or combinations thereof, which may accumulate, for example, in the top land crevices volume of a piston, or the piston ring-land and ring-groove crevices. The lubricant oil may be transferred from below the oil control ring to the piston top land area due to unusual piston ring movements. At low speed, high load conditions, in-cylinder pressures dynamics (compression and firing pressures) may be considerably different from in-cylinder pressures at lower loads, particularly due to strongly retarded combustion phasing and high boost and peak compression pressures which can influence ring motion dynamics.

At the foregoing loads, LSPI, which may be accompanied by subsequent detonation and/or severe engine knock, can cause severe damage to the engine very quickly (often within 1 to 5 engine cycles). Engine knock may occur with LSPI given that, after the normal spark from the igniter is provided, multiple flames may be present. The present invention aims to provide a use for inhibiting or reducing LSPI events, the use involving supplying to the engine a lubricant comprising an oil soluble titanium carboxylate, an oil of lubricating viscosity, and a polyalkenyl succinimide dispersant in an amount from 0.5 to 4 weight % of the composition.

In one embodiment of the invention, the engine is operated at speeds between 500 rpm and 3000 rpm, or 800 rpm to 2800 rpm, or even 1000 rpm to 2600 rpm. Additionally, the engine may be operated with a brake mean effective pressure of 10 bars to 30 bars, or 12 bars to 24 bars.

LSPI events, while comparatively uncommon, may be catastrophic in nature. Hence drastic reduction or even elimination of LSPI events during normal or sustained operation of a direct fuel injection engine is desirable. In one embodiment, the use of the invention is such that there are less than 20 LSPI events per 100,000 combustion events or less than 10 LSPI events per 100,000 combustion events. In one embodiment, there may be less than 5 LSPI events per 100,000 combustion events, less than 3 LSPI events per 100,000 combustion events; or there may be 0 LSPI events per 100,000 combustion events.

In one embodiment, the use of the invention provides a reduction in the number of LSPI events of at least 10 percent, or at least 20 percent, or at least 30 percent, or at least 50 percent.

### Fuel

The use of the present invention involves a spark-ignited direct injection internal combustion engine. In addition to the engine operating conditions and the lubricant composition, the composition of the fuel may impact LSPI events. In one embodiment, the fuel may comprise a fuel which is liquid at ambient temperature and is useful in fueling a spark ignited engine, a fuel which is gaseous at ambient temperatures, or combinations thereof.

The liquid fuel is normally a liquid at ambient conditions e.g., room temperature (20 to 30°C). The fuel can be a hydrocarbon fuel, a nonhydrocarbon fuel, or a mixture thereof. The hydrocarbon fuel may be a gasoline as defined by ASTM specification D4814. In an embodiment of the invention the fuel is a gasoline, and in other embodiments the fuel is a leaded gasoline, or a nonleaded gasoline.

The nonhydrocarbon fuel can be an oxygen containing composition, often referred to as an oxygenate, to include an alcohol, an ether, a ketone, an ester of a carboxylic acid, a nitroalkane, or a mixture thereof. The nonhydrocarbon fuel can include for example methanol, ethanol, methyl t-butyl ether, methyl ethyl ketone, transesterified oils and/or fats from plants and animals such as rapeseed methyl ester and soybean methyl ester, and nitromethane. Mixtures of hydrocarbon and nonhydrocarbon fuels can include, for example, gasoline and methanol and/or ethanol. In an embodiment of the invention, the liquid fuel is a mixture of gasoline and ethanol, wherein the ethanol content is at least 5 volume percent of the fuel composition, or at least 10 volume percent of the composition, or at least 15 volume percent, or 15 to 85 volume percent of the composition. In one embodiment, the liquid fuel contains less than 15% by volume ethanol content, less than 10% by volume ethanol content, less than 5% ethanol content by volume, or is substantially free of (i.e. less than 0.5% by volume) of ethanol.

In several embodiments of this invention, the fuel can have a sulfur content on a weight basis that is 5000 ppm or less, 1000 ppm or less, 300 ppm or less, 200 ppm or less, 30 ppm or less, or 10 ppm or less. In another embodiment, the fuel can have a sulfur content on a weight basis of 1 to 100 ppm. In one embodiment, the fuel contains about 0 ppm to about 1000 ppm, about 0 to about 500 ppm, about 0 to about 100 ppm, about 0 to about 50 ppm, about 0 to about 25 ppm, about 0 to about 10 ppm, or about 0 to 5 ppm of alkali metals, alkaline earth metals, transition metals or mixtures thereof. In another embodiment the fuel contains 1 to 10 ppm by weight of alkali metals, alkaline earth metals, transition metals or mixtures thereof.

The gaseous fuel is normally a gas at ambient conditions e.g., room temperature (20 to 30°C). Suitable gas fuels include natural gas, liquefied petroleum gas (LPG), compressed natural gas (CNG), or mixtures thereof. In one embodiment, the engine is fueled with natural gas.

The fuel compositions can further comprise one or more performance additives. Performance additives can be added to a fuel composition depending on several factors, including the type of internal combustion engine and the type of fuel being used in that engine, the quality of the fuel, and the service conditions under which the engine is being operated. In some embodiments, the performance additives added are free of nitrogen. In other embodiments, the additional performance additives may contain nitrogen.

The performance additives can include an antioxidant such as a hindered phenol or derivative thereof and/or a diarylamine or derivative thereof; a corrosion inhibitor such as an alkenylsuccinic acid; and/or a detergent/dispersant additive, such as a polyetheramine or nitrogen containing detergent, including but not limited to polyisobutylene (PIB) amine dispersants, Mannich detergents, succinimide dispersants, and their respective quaternary ammonium salts.

The performance additives may also include a cold flow improver, such as an esterified copolymer of maleic anhydride and styrene and/or a copolymer of ethylene and vinyl acetate; a foam inhibitor, such as a silicone fluid; a demulsifier such as a polyoxyalkylene and/or an alkyl polyether alcohol; a lubricity agent such as a fatty carboxylic acid, ester and/or amide derivatives of fatty carboxylic acids, or ester and/or amide derivatives of hydrocarbyl substituted succinic anhydrides; a metal deactivator, such as an aromatic triazole or derivative thereof, including but not limited to a benzotriazole such as tolytriazole; and/or a valve seat recession additive, such as an alkali metal sulfosuccinate salt. The additives may also include a biocide, an antistatic agent, a deicer, a fluidizer, such as a mineral oil and/or a poly(alpha-olefin) and/or a polyether, and a combustion improver, such as an octane or cetane improver.

The fluidizer may be a polyetheramine or a polyether compound. The polyetheramine can be represented by the formula R[-OCH₂CH(R¹)]ₙA, where R is a hydrocarbyl group, R¹ is selected from the group consisting of hydrogen, hydrocarbyl groups of 1 to 16 carbon atoms, and mixtures thereof, n is a number from 2 to about 50, and A is selected from the group consisting of --OCH₂CH₂CH₂NR²R² and --NR³R³, where each R² is independently hydrogen or hydrocarbyl, and each R³ is independently hydrogen, hydrocarbyl or -[R⁴N(R⁵)]ₚR⁶, where R⁴ is C₂-C₁₀ alkylene, R⁵ and R⁶ are independently hydrogen or hydrocarbyl, and p is a number from 1-7.

The fluidizer can be a polyether, which can be represented by the formula R⁷O[CH₂CH(R⁸)O]_{q}H, where R⁷ is a hydrocarbyl group, R⁸ is selected from the group consisting of hydrogen, hydrocarbyl groups of 1 to 16 carbon atoms, and mixtures thereof, and q is a number from 2 to about 50. The fluidizer can be a hydrocarbyl-terminated poly-(oxyalklene) aminocarbamate as described U.S. Pat. No. 5,503,644. The fluidizer can be an alkoxylate, wherein the alkoxylate can comprise: (i) a polyether containing two or more ester terminal groups; (ii) a polyether containing one or more ester groups and one or more terminal ether groups; or (iii) a polyether containing one or more ester groups and one or more terminal amino groups, wherein a terminal group is defined as a group located within five connecting carbon or oxygen atoms from the end of the polymer. Connecting is defined as the sum of the connecting carbon and oxygen atoms in the polymer or end group.

The performance additives which may be present in the fuel additive compositions and fuel compositions also include di-ester, di-amide, ester-amide, and ester-imide friction modifiers prepared by reacting a dicarboxylic acid (such as tartaric acid) and/or a tricarboxylic acid (such as citric acid), with an amine and/or alcohol, optionally in the presence of a known esterification catalyst. These friction modifiers often derived from tartaric acid, citric acid, or derivatives thereof, may be derived from amines and/or alcohols that are branched so that the friction modifier itself has significant amounts of branched hydrocarbyl groups present within it structure. Examples of suitable branched alcohols used to prepare these friction modifiers include 2-ethylhexanol, isotridecanol, Guerbet alcohols, or mixtures thereof.

In different embodiments the fuel composition may have a composition as described in the following table:

| Additive | Embodiments (ppm) | | |
|---|---|---|---|
| | A | C | D |
| Detergent/dispersant | 0 to 2500 | 25 to 150 | 500 to 2500 |
| Fluidizer | 0 to 5000 | 1 to 250 | 3000 to 5000 |
| Demulsifier | 0 to 50 | 0.5 to 5 | 1 to 25 |
| Corrosion Inhibitor | 0 to 200 | .5 to 10 | 20 to 200 |
| Antioxidant | 0 to 1000 | 5 to 125 | 500 to 1000 |
| Friction Modifier | 0 to 600 | 50 to 175 | 100 to 750 |
| Fuel | Balance to 100% | Balance to 100% | Balance to 100% |

### Oil of Lubricating Viscosity

The lubricating composition comprises an oil of lubricating viscosity. Such oils include natural and synthetic oils, oil derived from hydrocracking, hydrogenation, and hydrofinishing, unrefined, refined, re-refined oils or mixtures thereof. A more detailed description of unrefined, refined and re-refined oils is provided in International Publication WO2008/147704, paragraphs [0054] to [0056] (a similar disclosure is provided in US Patent Application 2010/197536, see [0072] to [0073]). A more detailed description of natural and synthetic lubricating oils is described in paragraphs [0058] to [0059] respectively of WO2008/147704 (a similar disclosure is provided in US Patent Application 2010/197536, see [0075] to [0076]). Synthetic oils may also be produced by Fischer-Tropsch reactions and typically may be hydroisomerised Fischer-Tropsch hydrocarbons or waxes. In one embodiment, oils may be prepared by a Fischer-Tropsch gas-to-liquid synthetic procedure as well as other gas-to-liquid oils.

Oils of lubricating viscosity may also be defined as specified in the April 2008 version of "Appendix E - API Base Oil Interchangeability Guidelines for Passenger Car Motor Oils and Diesel Engine Oils", section 1.3 Sub-heading 1.3. "Base Stock Categories". The API Guidelines are also summarised in US Patent US 7,285,516 (see column 11, line 64 to column 12, line 10). In one embodiment, the oil of lubricating viscosity may be an API Group II, Group III, or Group IV oil, or mixtures thereof. The five base oil groups are as follows:

| Base Oil Category | Sulfur (%) | Saturates (%) | Viscosity Index |
|---|---|---|---|
| Group I | >0.03 and/or | <90 | 80 to 120 |
| Group II | ≤0.03 and | ≥90 | 80 to 120 |
| Group III | ≤0.03 and | ≥90 | ≥120 |
| Group IV | All polyalphaolefins (PAO) | | |
| Group V | All others not included in Groups I, II, III, or IV | | |

The amount of the oil of lubricating viscosity present is typically the balance remaining after subtracting from 100 weight % (wt %) the sum of the amount of the compound of the invention and the other performance additives.

The lubricating composition may be in the form of a concentrate and/or a fully formulated lubricant. If the lubricating composition (comprising the additives disclosed herein) is in the form of a concentrate which may be combined with additional oil to form, in whole or in part, a finished lubricant), the ratio of the of these additives to the oil of lubricating viscosity and/or to diluent oil include the ranges of 1:99 to 99:1 by weight, or 80:20 to 10:90 by weight.

In one embodiment, the base oil has a kinematic viscosity at 100°C from 2 mm²/s (centiStokes - cSt) to 16 mm²/s, from 3 mm²/s to 10 mm²/s, or even from 4 mm²/s to 8 mm²/s.

The ability of a base oil to act as a solvent (i.e. solvency) may be a contributing factor in increasing the frequency of LSPI events during operation of a direct fuel-injected engine. Base oil solvency may be measured as the ability of an un-additized base oil to act as a solvent for polar constituents. In general, base oil solvency decreases as the base oil group moves from Group I to Group IV (PAO). That is, solvency of base oil may be ranked as follows for oil of a given kinematic viscosity: Group I > Group II > Group III > Group IV. Base oil solvency also decreases as the viscosity increases within a base oil group; base oil of low viscosity tends to have better solvency than similar base oil of higher viscosity. Base oil solvency may be measured by aniline point (ASTM D611).

In one embodiment, the base oil comprises at least 30 wt % of Group II or Group III base oil. In another embodiment, the base oil comprises at least 60 weight % of Group II or Group III base oil, or at least 80 wt % of Group II or Group III base oil. In one embodiment, the lubricant composition comprises less than 20 wt % of Group IV (i.e. polyalphaolefin) base oil. In another embodiment, the base oil comprises less than 10 wt % of Group IV base oil. In one embodiment, the lubricating composition is substantially free of (i.e. contains less than 0.5 wt %) of Group IV base oil.

Ester base fluids, which are characterized as Group V oils, have high levels of solvency as a result of their polar nature. Addition of low levels (typically less than 10 wt %) of ester to a lubricating composition may significantly increase the resulting solvency of the base oil mixture. Esters may be broadly grouped into two categories: synthetic and natural. An ester base fluid would have a kinematic viscosity at 100°C suitable for use in an engine oil lubricant, such as between 2 cSt and 30 cSt, or from 3 cSt to 20 cSt, or even from 4 cSt to 12 cSt.

Synthetic esters may comprise esters of dicarboxylic acids (e.g., phthalic acid, succinic acid, alkyl succinic acids and alkenyl succinic acids, maleic acid, azelaic acid, suberic acid, sebacic acid, fumaric acid, adipic acid, linoleic acid dimer, malonic acid, alkyl malonic acids, and alkenyl malonic acids) with any of variety of monohydric alcohols (e.g., butyl alcohol, hexyl alcohol, dodecyl alcohol, 2-ethylhexyl alcohol, ethylene glycol, diethylene glycol monoether, and propylene glycol). Specific examples of these esters include dibutyl adipate, di(2-ethylhexyl) sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, and the complex ester formed by reacting one mole of sebacic acid with two moles of tetraethylene glycol and two moles of 2-ethylhexanoic acid. Other synthetic esters include those made from C5 to C12 monocarboxylic acids and polyols and polyol ethers such as neopentyl glycol, trimethylolpropane, pentaerythritol, dipentaerythritol, and tripentaerythritol. Esters can also be monoesters of mono-carboxylic acids and monohydric alcohols.

Natural (or bio-derived) esters refer to materials derived from a renewable biological resource, organism, or entity, distinct from materials derived from petroleum or equivalent raw materials. Natural esters include fatty acid triglycerides, hydrolyzed or partially hydrolyzed triglycerides, or transesterified triglyceride esters, such as fatty acid methyl ester (or FAME). Suitable triglycerides include, but are not limited to, palm oil, soybean oil, sunflower oil, rapeseed oil, olive oil, linseed oil, and related materials. Other sources of triglycerides include, but are not limited to, algae, animal tallow, and zooplankton. Methods for producing biolubricants from natural triglycerides is described in, e.g., United States patent application 2011/0009300A1.

In one embodiment, the lubricating composition comprises at least 2 wt % of an ester base fluid. In one embodiment the lubricating composition comprises at least 4 wt % of an ester base fluid, or at least 7 wt % of an ester base fluid, or even at least 10 wt % of an ester base fluid.

### Metal Compounds

The compositions of the disclosed technology will also include an oil- soluble titanium carboxylate. The titanium carboxylate compound serves to facilitate reduction in LSPI events as described herein, when present in a lubricant composition. By "oil-soluble" or "hydrocarbon soluble" is meant a material which will dissolve or disperse on a macroscopic or gross scale in an oil or hydrocarbon, as the case may be, typically a mineral oil, such that a practical solution or dispersion can be prepared. In order to prepare a useful lubricant formulation, the titanium carboxylate should not precipitate or settle out over a course of several days or weeks. Such materials may exhibit true solubility on a molecular scale or may exist in the form of agglomerations of varying size or scale, provided however that they have dissolved or dispersed on a gross scale.

Among the titanium compounds that may be used in the present invention are titanium citrate or titanium oleate; Ti compounds may also exist in dimeric or oligomeric form, containing Ti-O-Ti structures. Such titanium materials are commercially available or can be readily prepared by appropriate synthesis techniques which will be apparent to the person skilled in the art. They may exist at room temperature as a solid or a liquid, depending on the particular compound. They may also be provided in a solution form in an appropriate inert solvent.

In one embodiment, the oil-soluble titanium carboxylate may be titanium (IV) neodecanoate or other carboxylates where the carboxylate group may contain 3 to 20 carbon atoms or 4 to 18 or 6 to 16 or 8 to 12 or 10 carbon atoms. The carboxylate group may be branched or, alternatively, linear.

In one embodiment, the titanium is not a part of or affixed to a long-chain polymer, that is, a high molecular weight polymer. Thus, the titanium species may, in these circumstances, have a number average molecular weight of less than 150,000 or less than 100,000 or 30,000 or 20,000 or 10,000 or 5000, or 3000 or 2000, e.g, about 1000 or less than 1000. Non-polymeric species providing the titanium as disclosed above will typically be below the molecular weight range of such polymers.

The oil-soluble titanium carboxylate may be present in the lubricant composition in an amount to provide 10 to 1000 parts per million, or 20 to 500 ppm or 50 to 400 ppm or 10 to 250 ppm or 50 to 250 or 50 to 200 or 100 to 200 ppm or 75 to 500 ppm of titanium. In other embodiments the amount of titanium delivered to the lubricant composition by the titanium compound or compounds may be greater than 1000 ppm such as, up to 1250 ppm or 1500 ppm or 2000 ppm or 2500 ppm or 5000 ppm. In still other embodiments, the amount of titanium may be relatively low, e.g., 5 - 100 or 8 - 50 or 8 - 45 or 10 - 45 or 15 - 30 or 10 - 25 parts per million of titanium or 1 to less than 50 parts per million, or 8 to less than 50 parts per million by weight Ti, regardless of the anionic portion of the compound.

These limits may vary with the particular system investigated and may be influenced to some extent by the anion or complexing agent associated with the titanium. Also, the amount of the particular titanium compound to be employed will depend on the relative weight of the anionic or complexing groups associated with the titanium. Titanium isopropoxide, for instance, is typically commercially supplied in a form which contains 16.8% titanium by weight. Thus, if amounts of 20 to 100 ppm of titanium are to be provided, about 119 to about 595 ppm (that is, about 0.01 to about 0.06 percent by weight) of titanium isopropoxide would be used, and so on.

It will be understood, therefore, that a sufficient amount of titanium compound (i.e. oil soluble titanium carboxylate)may be added to the lubricating composition to provide the desired amount of titanium metal. In this respect, the titanium compound may be present at 0.01 wt % to 5 wt %, or 0.01 wt % to 4 wt %, or 0.01 wt % to 2 wt %, or 0.01 wt % to 1.5 wt % of the lubricating composition.

The titanium compound can be imparted to the lubricant composition in any convenient manner, such as by adding to the otherwise finished lubricant (top-treating) or by pre-blending the titanium compound in the form of a concentrate in an oil or other suitable solvent, optionally along with one or more additional components such as an antioxidant, a friction modifier such as glycerol monooleate, a dispersant such as a succinimide dispersant, or a detergent such as an overbased sulfurized phenate detergent. Such additional components, typically along with diluent oil, may typically be included in an additive package, sometimes referred to as a DI (detergent-inhibitor) package.

The oil-soluble metal compound may be post-added to a lubricant that is supplied to an engine, by addition of a lubricant supplement added to the existing lubricant, wherein the lubricant supplement comprises one or more metal compounds as described herein. In this way, while the present use may be practiced by means of supplying to an engine a lubricant composition containing a titanium compound as herein described, as the sole or substantially entire lubricant, it will be understood that in an alternate embodiment, the existing lubricant supplied to the engine may be supplemented with a lubricant supplement comprising a titanium compound, so that removal of the all or substantially all of the existing lubricant is not necessary to treat an engine to reduce LSPI events.

In this respect, a use of reducing subsequent LSPI events in an engine which has experienced at least one LSPI event may comprise the step of adding a lubricant supplement to a lubricant supplied to the engine, wherein the added lubricant supplement comprises not more than 20%, or 15%, or 10% or 5% by volume with respect to the volume of the lubricant, and wherein the lubricant supplement comprises a titanium compound.

Alternatively, a use of reducing subsequent LSPI events in an engine which has experienced at least one LSPI event, may comprise the step of adding an amount of a lubricant supplement comprising a titanium compound to a lubricant supplied to the engine, wherein the amount of the lubricant supplement is sufficient to contribute 1 to 1000 parts per million, or 10 to 500 ppm or 10 to 400 ppm or 10 to 250 ppm by weight of titanium to the lubricant.

### Other Performance Additives

The compositions described herein include a polyalkenyl succinimide dispersant in an amount from 0.5 to 4 weight % of the composition and may optionally comprise one or more additional performance additives. These additional performance additives may include one or more metal deactivators, viscosity modifiers, detergents, friction modifiers, antiwear agents, corrosion inhibitors, dispersants, dispersant viscosity modifiers, extreme pressure agents, antioxidants, foam inhibitors, demulsifiers, pour point depressants, seal swelling agents, and any combination or mixture thereof. Typically, fully-formulated lubricating oil will contain one or more of these performance additives, and often a package of multiple performance additives.

In one embodiment, the lubricating composition may further comprise a dispersant, an antiwear agent, a dispersant viscosity modifier, a friction modifier, a viscosity modifier, an antioxidant, an overbased detergent, or a combination thereof, where each of the additives listed may be a mixture of two or more of that type of additive. In one embodiment, the lubricating composition may further comprise an antiwear agent, a dispersant viscosity modifier, a friction modifier, a viscosity modifier (typically an olefin copolymer such as an ethylene-propylene copolymer), an antioxidant (including phenolic and aminic antioxidants), an overbased detergent (including overbased sulfonates and phenates), or a combination thereof, where each of the additives listed may be a mixture of two or more of that type of additive.

In one embodiment, the dispersant may be present as a single dispersant. In one embodiment, the dispersant may be present as a mixture of two or three different dispersants, wherein at least one is the succinimide dispersant.

The dispersant is polyisobutylene succinimide. Typically the polyisobutylene from which polyisobutylene succinic anhydride is derived has a number average molecular weight of 350 to 5000, or 550 to 3000 or 750 to 2500. Succinimide dispersants and their preparation are disclosed, for instance in US Patents 3,172,892, 3,219,666, 3,316,177, 3,340,281, 3,351,552, 3,381,022, 3,433,744, 3,444,170, 3,467,668, 3,501,405, 3,542,680, 3,576,743, 3,632,511, 4,234,435, Re 26,433, and 6,165,235, 7,238,650 and EP Patent 0 355 895B1.

The dispersant may also be post-treated by conventional methods by a reaction with any of a variety of agents. Among these are boron compounds, urea, thiourea, dimercaptothiadiazoles, carbon disulfide, aldehydes, ketones, carboxylic acids, hydrocarbon-substituted succinic anhydrides, maleic anhydride, nitriles, epoxides, and phosphorus compounds. The borated succinimide may be known to the skilled person and may be prepared by reacting a borating agent such as boric acid, with a polyisobutylene succinimide. Typically the polyisobutylene from which polyisobutylene succinic succinimide may be derived has a number average molecular weight of 350 to 5000, or 550 to 3000 or 750 to 2500.

The borated polyisobutylene succinimide may have a carbonyl to nitrogen ratio of 1:1 to 1:5, or 1:1 to 1:4, or 1: 1.3 to 3: or 1:1.5 to 1:2, or 1:1.4 to 1:0.6. The borated dispersant may be present in an amount to deliver at least 125 ppm to 250 ppm, or 150 ppm to 200 ppm of boron to the lubricating composition

In one embodiment, the lubricating composition further comprises a dispersant viscosity modifier. The dispersant viscosity modifier may be present at 0 wt % to 5 wt %, or 0 wt % to 4 wt %, or 0.05 wt % to 2 wt % of the lubricating composition.

Suitable dispersant viscosity modifiers include functionalized polyolefins, for example, ethylene-propylene copolymers that have been functionalized with an acylating agent such as maleic anhydride and an amine; polymethacrylates functionalized with an amine, or esterified styrenemaleic anhydride copolymers reacted with an amine. More detailed description of dispersant viscosity modifiers are disclosed in International Publication WO2006/015130 or U.S. Patents 4,863,623; 6,107,257; 6,107,258; and 6,117,825. In one embodiment, the dispersant viscosity modifier may include those described in U.S. Patent 4,863,623 (see column 2, line 15 to column 3, line 52) or in International Publication WO2006/015130 (see page 2, paragraph [0008] and preparative examples are described at paragraphs [0065] to [0073]).

In one embodiment, the lubricating composition further includes an antiwear agent, which may be a phosphorus-containing antiwear agent. Examples of antiwear agents may include metal thiophosphates, phosphoric acid esters and salts thereof, phosphorus-containing carboxylic acids, esters, ethers, and amides; and phosphites. Typically, the phosphorus-containing antiwear agent may be a zinc dialkyldithiophosphate, or mixtures thereof. Zinc dialkyldithiophosphates are known in the art. The antiwear agent may be present at 0.01 wt % to 3 wt %, or 0.1 wt % to 1.5 wt %, or 0.5 wt % to 0.9 wt % of the lubricating composition. In certain embodiments a phosphorus antiwear agent may be present in an amount to deliver 0.01 to 0.2 or 0.015 to 0.15 or 0.02 to 0.1 or 0.025 to 0.08 percent phosphorus. Non-phosphorus-containing antiwear agents include borate esters (including borated epoxides), dithiocarbamate compounds, molybdenum- containing compounds, and sulfurized olefins.

Other materials that may be used as antiwear agents (also referred to as ashless antiwear agents) include tartrate esters, tartramides, and tartrimides. Examples include oleyl tartrimide (the imide formed from oleylamine and tartaric acid) and oleyl diesters (from, e.g, mixed C 12-16 alcohols). Other related materials that may be useful include esters, amides, and imides of other hydroxy-carboxylic acids in general, including hydroxy-polycarboxylic acids, for instance, acids such as tartaric acid, malic acid, citric acid, lactic acid, glycolic acid, hydroxy-propionic acid, hydroxy glutaric acid, and mixtures thereof. These materials may also impart additional functionality to a lubricant beyond antiwear performance. These materials are described in greater detail in US Publication 2006-0079413 and PCT publication WO2010/077630. Such derivatives of (or compounds derived from) a hydroxy- carboxylic acid, if present, may typically be present in the lubricating composition in an amount of 0.1 weight % to 5 weight %, or 0.2 weight % to 3 weight %, or greater than 0.2 weight % to 3 weight %.

In one embodiment, the lubricating composition further comprises a molybdenum compound. The molybdenum compound may be selected from the group consisting of molybdenum dialkyldithiophosphates, molybdenum dithiocarbamates, amine salts of molybdenum compounds, and mixtures thereof. The molybdenum compound may provide the lubricating composition with 10 to 1000 ppm, or 20 to 1000 ppm, or 20 to 750 ppm, or 20 ppm to 300 ppm, or 20 ppm to 250 ppm of molybdenum.

In another embodiment, the lubricating composition may be free of or substantially free of molybdenum containing compounds. For purpose herein, the term "free of or substantially free of" means no intentionally added amount of material is present in the composition, but does allow for minute (less than 10 ppm) amounts of molybdenum, which may be regarded as a contaminant.

In one embodiment, the lubricating composition further comprises a metal-containing detergent. The metal-containing detergent may be an overbased detergent. Overbased detergents, otherwise referred to as overbased or superbased salts, are characterized by a metal content in excess of that which would be necessary for neutralization according to the stoichiometry of the metal and the particular acidic organic compound reacted with the metal. The overbased detergent may be selected from the group consisting of non-sulfur containing phenates, sulfur containing phenates, sulfonates, salixarates, salicylates, and mixtures thereof.

Phenate detergents are typically derived from p-hydrocarbyl phenols. Alkylphenols of this type may be coupled with sulfur and overbased, coupled with aldehyde and overbased, or carboxylated to form salicylate detergents. Typical salicylate detergents are metal overbased salicylates having a sufficiently long hydrocarbon substituent to promote oil solubility. Hydrocarbyl-substituted salicylic acids can be prepared by the reaction of the corresponding phenol by reaction of an alkali metal salt thereof with carbon dioxide. The hydrocarbon substituent of the detergent may comprise 1 to 60 carbons, or 1 to 50, or 6 to 30, or 8 to 24, or 10 to 20 carbons.

Suitable alkylphenols include those alkylated with oligomers of propylene, i.e. tetrapropenylphenol (i.e. p-dodecylphenol or PDDP) and pentapropenylphenol. Other suitable alkylphenols include those alkylated with alpha-olefins, isomerized alpha-olefins, and polyolefins like polyisobutylene. In one embodiment, the lubricating composition comprises less than 0.2 wt %, or less than 0.1 wt %, or even less than 0.05 wt % of a phenate detergent derived from PDDP. In one embodiment, the lubricant composition comprises a phenate detergent that is not derived from PDDP.

The metal-containing detergent may also include "hybrid" detergents formed with mixed surfactant systems including phenate and/or sulfonate components, e.g. phenate/salicylates, sulfonate/phenates, sulfonate/salicylates, sulfonates/phenates/salicylates, as described, for example, in US Patents 6,429,179; 6,429,179; 6,153,565; and 6,281,179. Where, for example, a hybrid sulfonate/phenate detergent is employed, the hybrid detergent would be considered equivalent to amounts of distinct phenate and sulfonate detergents introducing like amounts of phenate and sulfonate soaps, respectively.

The overbased metal-containing detergent may be sodium salts, calcium salts, magnesium salts, or mixtures thereof of the phenates, sulfur-containing phenates, sulfonates, salixarates and salicylates. Overbased phenates and salicylates typically have a total base number of 180 to 450 TBN. Overbased sulfonates typically have a total base number of 250 to 600, or 300 to 500. Overbased detergents are known in the art. In one embodiment, the sulfonate detergent may be predominantly a linear alkylbenzene sulfonate detergent having a metal ratio of at least 8 as is described in paragraphs [0026] to [0037] of US Patent Publication 2005065045 (and granted as US 7,407,919). The linear alkylbenzene sulfonate detergent may be particularly useful for assisting in improving fuel economy. The linear alkyl group may be attached to the benzene ring anywhere along the linear chain of the alkyl group, but often in the 2, 3 or 4 position of the linear chain, and in some instances, predominantly in the 2 position, resulting in the linear alkylbenzene sulfonate detergent. Overbased detergents are known in the art. The overbased detergent may be present at 0 wt % to 15 wt %, or 0.1 wt % to 10 wt %, or 0.2 wt % to 8 wt %, or 0.2 wt % to 3 wt %. For example, in a heavy duty diesel engine, the detergent may be present at 2 wt % to 3 wt % of the lubricating composition. For a passenger car engine, the detergent may be present at 0.2 wt % to 1 wt % of the lubricating composition.

Metal-containing detergents contribute sulfated ash to a lubricating composition. Sulfated ash may be determined by ASTM D874. In one embodiment, the lubricating composition comprises a metal-containing detergent in an amount to deliver at least 0.4 weight percent sulfated ash to the total composition. In another embodiment, the metal-containing detergent is present in an amount to deliver at least 0.6 weight percent sulfated ash, or at least 0.75 weight percent sulfated ash, or even at least 0.9 weight percent sulfated ash to the lubricating composition.

In one embodiment, the lubricating composition further comprises a friction modifier. Examples of friction modifiers include long chain fatty acid derivatives of amines, fatty esters, or epoxides; fatty imidazolines such as condensation products of carboxylic acids and polyalkylenepolyamines; amine salts of alkylphosphoric acids; fatty alkyl tartrates; fatty alkyl tartrimides; or fatty alkyl tartramides. The term fatty, as used herein, can mean having a C8-22 linear alkyl group.

Friction modifiers may also encompass materials such as sulfurized fatty compounds and olefins, molybdenum dialkyldithiophosphates, molybdenum dithiocarbamates, sunflower oil or monoester of a polyol and an aliphatic carboxylic acid.

In one embodiment the friction modifier may be selected from the group consisting of long chain fatty acid derivatives of amines, long chain fatty esters, or long chain fatty epoxides; fatty imidazolines; amine salts of alkylphosphoric acids; fatty alkyl tartrates; fatty alkyl tartrimides; and fatty alkyl tartramides. The friction modifier may be present at 0 wt % to 6 wt %, or 0.05 wt % to 4 wt %, or 0.1 wt % to 2 wt % of the lubricating composition.

In one embodiment, the friction modifier may be a long chain fatty acid ester. In another embodiment the long chain fatty acid ester may be a mono-ester or a diester or a mixture thereof, and in another embodiment the long chain fatty acid ester may be a triglyceride.

Other performance additives such as corrosion inhibitors include those described in paragraphs 5 to 8 of US Application US05/038319, published as WO2006/047486, octyl octanamide, condensation products of dodecenyl succinic acid or anhydride and a fatty acid such as oleic acid with a polyamine. In one embodiment, the corrosion inhibitors include the Synalox^{®} (a registered trademark of The Dow Chemical Company) corrosion inhibitor. The Synalox^{®} corrosion inhibitor may be a homopolymer or copolymer of propylene oxide. The Synalox^{®} corrosion inhibitor is described in more detail in a product brochure with Form No. 118-01453-0702 AMS, published by The Dow Chemical Company. The product brochure is entitled "SYNALOX Lubricants, High-Performance Polyglycols for Demanding Applications".

The lubricating composition may further include metal deactivators, including derivatives of benzotriazoles (typically tolyltriazole), dimercaptothiadiazole derivatives, 1,2,4-triazoles, benzimidazoles, 2-alkyldithiobenzimidazoles, or 2-alkyldithiobenzothiazoles; foam inhibitors, including copolymers of ethyl acrylate and 2-ethylhexylacrylate and copolymers of ethyl acrylate and 2-ethylhexylacrylate and vinyl acetate; demulsifiers including trialkyl phosphates, polyethylene glycols, polyethylene oxides, polypropylene oxides and (ethylene oxide-propylene oxide) polymers; and pour point depressants, including esters of maleic anhydride-styrene, polymethacrylates, polyacrylates or polyacrylamides.

Pour point depressants that may be useful in the compositions further include polyalphaolefins, esters of maleic anhydride-styrene, poly(meth)acrylates, polyacrylates or polyacrylamides.

In one embodiment, the composition may comprise one or more antioxidants, which may include one or more ashless antioxidants. Antioxidants provide and/or improve the antioxidation performance of organic compositions, including lubricant compositions that contain organic components, by preventing or retarding oxidative and thermal decomposition. Suitable antioxidants may be catalytic or stoichiometric in activity and include any compound capable of inhibiting or decomposing free radicals, including peroxide.

Ashless antioxidants may include one or more of arylamines, diarylamines, alkylated arylamines, alkylated diaryl amines, phenols, hindered phenols, sulfurized olefins, or mixtures thereof. In one embodiment the lubricating composition includes an antioxidant, or mixtures thereof. The antioxidant may be present at 0 wt % to 15 wt %, or 0.1 wt % to 10 wt %, or 0.5 wt % to 5 wt %, or 0.5 wt % to 3 wt %, or 0.3 wt % to 1.5 wt % of the lubricating composition.

The diarylamine or alkylated diarylamine may be a phenyl-α-naphthylamine (PANA), an alkylated diphenylamine, or an alkylated phenylnapthylamine, or mixtures thereof. The alkylated diphenylamine may include di-nonylated diphenylamine, nonyl diphenylamine, octyl diphenylamine, di-octylated diphenylamine, di-decylated diphenylamine, decyl diphenylamine and mixtures thereof. In one embodiment, the diphenylamine may include nonyl diphenylamine, dinonyl diphenylamine, octyl diphenylamine, dioctyl diphenylamine, or mixtures thereof. In one embodiment the alkylated diphenylamine may include nonyl diphenylamine, or dinonyl diphenylamine. The alkylated diarylamine may include octyl, di-octyl, nonyl, di-nonyl, decyl or di-decyl phenylnapthylamines.

Diarylamines of the invention may also be represented by formula (I): 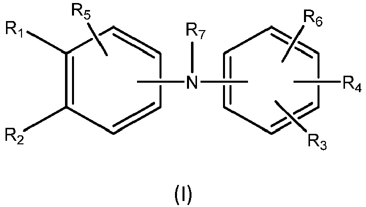 wherein Ri and R₂ are moieties which, together with the carbon atoms to which they are bonded, are joined together to form a 5-, 6-, or 7-membered ring (such as a carbocyclic ring or cyclic hydrocarbylene ring); R₃ and R₄ are independently hydrogen, hydrocarbyl groups, or are moieties which, taken together with the carbon atoms to which they are bonded, form a 5-, 6-, or 7-membered ring (such as a carbocyclic ring or cyclic hydrocarbylene ring); R₅ and R₆ are independently hydrogen, hydrocarbyl groups, or are moieties (typically hydrocarbyl moieties) which, taken together with the carbon atoms to which they are attached, form a ring, or represent a zero-carbon or direct linkage between the rings; and R₇ is hydrogen or a hydrocarbyl group

In one embodiment, the diarylamine is a N-phenyl-naphthylamine (PNA).

In another embodiment, the diarylamine may be represented by formula (Ia): 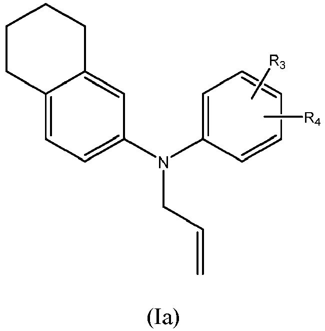 wherein R₃ and R₄ are defined as above.

In another embodiment, the diarylamine compounds include those having the general formula (Ib) 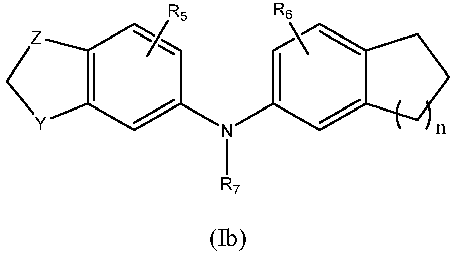 wherein R₇ is defined as above; Rs and R₆ are independently hydrogen, hydrocarbyl groups or taken together may form a ring, such as a dihydroacridan; n = 1 or 2; and Y and Z independently represent carbon or heteroatoms such as N, O and S.

In a particular embodiment, compounds of formula (Ib) further comprise an N-allyl group, for example the compound of formula (Ic)

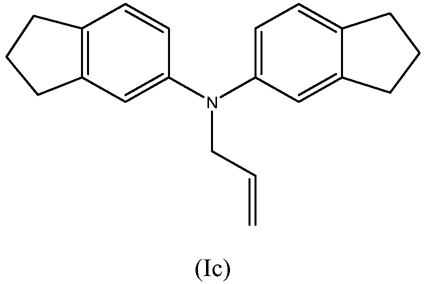

In one embodiment, the diarylamine is a dihydroacridan derivative of formula (Id) 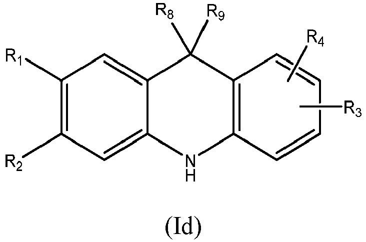 wherein Ri, R₂, R₃, and R₄ are defined above; Rs and R₉ are independently hydrogen or a hydrocarbyl group of 1 to 20 carbon atoms.

In one embodiment, the diarylamine of formula (I) is chosen such that Rs and R₆ represent a direct (or zero-carbon) link between the aryl rings. The result is a carbazole of formula (Ig) 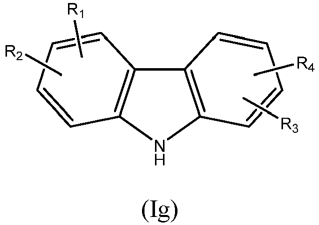 wherein Ri, R₂, R₃, and R₄ are defined as above.

The diarylamine antioxidant may be present on a weight basis of the lubrication composition at 0.1% to 10%, 0.35% to 5%, or even 0.5% to 2%.

The phenolic antioxidant may be a simple alkyl phenol, a hindered phenol, or coupled phenolic compounds.

The hindered phenol antioxidant often contains a secondary butyl and/or a tertiary butyl group as a sterically hindering group. The phenol group may be further substituted with a hydrocarbyl group (typically linear or branched alkyl) and/or a bridging group linking to a second aromatic group. Examples of suitable hindered phenol antioxidants include 2,6-di-tert-butylphenol, 4-methyl-2,6-di-tert-butylphenol, 4-ethyl-2,6-di-tert-butylphenol, 4-propyl-2,6-di-tert-butylphenol or 4-butyl-2,6-di-tert-butylphenol, 4-dodecyl-2,6-di-tert-butylphenol, or butyl 3-(3,5-ditert-butyl-4-hydroxyphenyl)propanoate. In one embodiment, the hindered phenol antioxidant may be an ester and may include, e.g., Irganox^{™} L-135 from Ciba.

Coupled phenols often contain two alkylphenols coupled with alkylene groups to form bisphenol compounds. Examples of suitable coupled phenol compounds include 4,4'- methylene bis-(2,6-di-tert-butyl phenol), 4-methyl-2,6-di-tert-butylphenol, 2,2'-bis-(6-t-butyl-4-heptylphenol); 4,4'-bis(2,6-di-t-butyl phenol), 2,2'-methylenebis(4-methyl-6-t-butylphenol), and 2,2'-methylene bis(4-ethyl-6-t-butylphenol).

Phenols also include polyhydric aromatic compounds and their derivatives. Examples of suitable polyhydric aromatic compounds include esters and amides of gallic acid, 2,5-dihydroxybenzoic acid, 2,6-dihydroxybenzoic acid, 1,4-dihydroxy-2-naphthoic acid, 3,5-dihydroxynaphthoic acid, 3,7-dihydroxy naphthoic acid, and mixtures thereof.

In one embodiment, the phenolic antioxidant comprises a hindered phenol. In another embodiment the hindered phenol is derived from 2,6-ditertbutyl phenol.

In one embodiment the lubricating composition comprises a phenolic antioxidant in a range of 0.01 wt % to 5 wt %, or 0.1 wt % to 4 wt %, or 0.2 wt % to 3 wt %, or 0.5 wt % to 2 wt % of the lubricating composition.

Sulfurized olefins are well known commercial materials, and those which are substantially nitrogen-free, that is, not containing nitrogen functionality, are readily available. The olefinic compounds which may be sulfurized are diverse in nature. They contain at least one olefinic double bond, which is defined as a non-aromatic double bond; that is, one connecting two aliphatic carbon atoms. These materials generally have sulfide linkages having 1 to 10 sulfur atoms, for instance, 1 to 4, or 1 or 2. In one embodiment, the lubricating composition comprises a sulfurized olefin in a range 0.2 weight percent to 2.5 weight percent, or 0.5 weight percent to 2.0 weight percent, or 0.7 weight percent to 1.5 weight percent.

The ashless antioxidants may be used separately or in combination. In one embodiment of the invention, two or more different antioxidants are used in combination, such that there is at least 0.1 weight percent of each of the at least two antioxidants and wherein the combined amount of the ashless antioxidants is 0.5 to 5 weight percent. In one embodiment, there may be at least 0.25 to 3 weight percent of each ashless antioxidant. In one embodiment, the combined amount of ashless antioxidants may be from 1.0 to 5.0 weight percent, or 1.4 to 3.0 weight percent of one or more antioxidants.

In different embodiments the lubricating composition may have a composition as described in the following table:

| Additive | Embodiments (wt %) | | |
|---|---|---|---|
| | A | B | C |
| Group (IV) Metal Compound | 0.01 to 2.0 | 0.01 to 1.5 | 0.02 to 1.0 |
| Dispersant | 0.05 to 12 | 0.75 to 8 | 0.5 to 6 |
| Dispersant Viscosity Modifier | 0 or 0.05 to 5 | 0 or 0.05 to 4 | 0.1 to 2 |
| Overbased Detergent | 0 or 0.05 to 15 | 0.1 to 10 | 0.2 to 8 |
| Antioxidant | 0 or 0.05 to 15 | 0.1 to 10 | 0.5 to 5 |
| Antiwear Agent | 0 or 0.05 to 15 | 0.1 to 10 | 0.3 to 5 |
| Friction Modifier | 0 or 0.05 to 6 | 0.05 to 4 | 0.1 to 2 |
| Viscosity Modifier | 0 or 0.05 to 10 | 0.5 to 8 | 1 to 6 |
| Any Other Performance Additive | 0 or 0.05 to 10 | 0 or 0.05 to 8 | 0 or 0.05 to 6 |
| Oil of Lubricating Viscosity | Balance to 100 % | Balance to 100% | Balance to 100% |

The present invention provides a surprising ability to prevent damage to an engine in operation due to pre-ignition events resulting from direct gasoline injection into the combustion chamber. This is accomplished while maintaining fuel economy performance, low sulfated ash levels, and other limitations, required by increasingly stringent government regulations.

### Industrial Application

As described above, the invention provides the use of an oil-soluble titanium carboxylate for reducing low speed pre-ignition events in a spark-ignited direct injection internal combustion engine, wherein the oil-soluble titanium carboxylate is present in a lubricant composition as disclosed herein. Generally, the lubricant is added to the lubricating system of the internal combustion engine, which then delivers the lubricating composition to the critical parts of the engine, during its operation, that require lubrication.

The lubricating compositions described above are used in a spark-ignited direct injection internal combustion engine. The engine components may have a surface of steel or aluminum (typically a surface of steel), and may also be coated for example with a diamondlike carbon (DLC) coating.

An aluminum surface may be comprised of an aluminum alloy that may be a eutectic or hyper-eutectic aluminum alloy (such as those derived from aluminum silicates, aluminum oxides, or other ceramic materials). The aluminum surface may be present on a cylinder bore, cylinder block, piston, or piston ring having an aluminum alloy, or aluminum composite.

The spark-ignited direct injection internal combustion engine may be fitted with an emission control system or a turbocharger. Examples of the emission control system include diesel particulate filters (DPF), or systems employing selective catalytic reduction (SCR).

The spark-ignited direct injection internal combustion engine is distinct from a gas turbine. In an internal combustion engine, individual combustion events translate from a linear reciprocating force into a rotational torque through the rod and crankshaft. In contrast, in a gas turbine (which may also be referred to as a jet engine) a continuous combustion process generates a rotational torque continuously without translation, and can also develop thrust at the exhaust outlet. These differences in operation conditions of a gas turbine and internal combustion engine result in different operating environments and stresses.

The lubricant composition for a spark-ignited direct injection internal combustion engine may be suitable for any engine lubricant irrespective of the sulfur, phosphorus or sulfated ash (ASTM D-874) content. The sulfur content of the engine oil lubricant may be 1 wt % or less, or 0.8 wt % or less, or 0.5 wt % or less, or 0.3 wt % or less. In one embodiment, the sulfur content may be in the range of 0.001 wt % to 0.5 wt %, or 0.01 wt % to 0.3 wt %. The phosphorus content may be 0.2 wt % or less, or 0.12 wt % or less, or 0.1 wt % or less, or 0.085 wt % or less, or 0.08 wt % or less, or even 0.06 wt % or less, 0.055 wt % or less, or 0.05 wt % or less. In one embodiment the phosphorus content may be 100 ppm to 1000 ppm, or 200 ppm to 600 ppm. The total sulfated ash content may be 2 wt % or less, or 1.5 wt % or less, or 1.1 wt % or less, or 1 wt % or less, or 0.8 wt % or less, or 0.5 wt % or less, or 0.4 wt % or less. In one embodiment, the sulfated ash content may be 0.05 wt % to 0.9 wt %, or 0.1 wt % to 0.2 wt % or to 0.45 wt %.

In one embodiment, the lubricating composition may be an engine oil, wherein the lubricating composition may be characterized as having at least one of (i) a sulfur content of 0.5 wt % or less, (ii) a phosphorus content of 0.1 wt % or less, (iii) a sulfated ash content of 1.5 wt % or less, or combinations thereof.

### EXAMPLES

The invention will be further illustrated by the following examples, which set forth particularly advantageous embodiments. While the examples are provided to illustrate the invention, they are not intended to limit it.

### Lubricating Compositions

A series of engine lubricants in Group III or Group II base oil of lubricating viscosity may be prepared containing one or more titanium compounds described above as well as conventional additives including polymeric viscosity modifier, ashless succinimide dispersant, overbased detergents, antioxidants (combination of phenolic ester and diarylamine), zinc dialkyldithiophosphate (ZDDP), as well as other performance additives as follows (Table 1 and Table 2). The phosphorus, sulfur and ash contents of each of the examples are also presented in the table in part to show that each example has a similar amount of these materials and so provide a proper comparison between the comparative and invention examples.

**Table 1 - Lubricating Oil Composition Formulations**

| Example | COMP EX1 | INV EX1 | Comp EX2 | INV EX2 | Comp EX3 | INV EX3 | Comp EX4 | INV EX4 |
|---|---|---|---|---|---|---|---|---|
| Vis Grade | 5W-30 | 5W-30 | 5W-30 | 5W-30 | 5W-30 | 5W-30 | 0W-20 | 0W-20 |
| Group III or Group II Base Oil | Balance to = 100% | | | | | | | |
| Ti Compound | 0 | 0.028 | 0 | 0.06 | 0 | 0.2 | 0.06 | 0.96 |
| Hindered phenol² | 0 | 0 | 0 | 0 | 0 | 0 | 0.5 | 0.5 |
| Diarylamine³ | 1.2 | 1.2 | 1.2 | 1.2 | 1.1 | 1.1 | 1 | 1 |
| Ca Detergent⁴ | 0.65 | 0.65 | 0.44 | 0.44 | 0.49 | 0.49 | 0.97 | 0.97 |
| Mg Detergent⁵ | 0.29 | 0.34 | 0.29 | 0.37 | 0.4 | 0.4 | 0 | 0 |
| Na Sulfonate | 0 | 0 | 0.16 | 0.16 | 0 | 0 | 0 | 0 |
| Dispersant | 2.8 | 3.2 | 2.8 | 3.2 | 2.3 | 2.3 | 1.9 | 1.9 |
| ZDDP | 0.79 | 0.79 | 0.79 | 0.79 | 0.79 | 0.79 | 1.01 | 1.01 |
| VI Improver | 0.56 | 0.59 | 0.56 | 0.53 | 0.6 | 0.6 | 2.2 | 2.2 |
| Additional Additives⁶ | 1.5 | 1.6 | 1.5 | 3.1 | 2.4 | 2.4 | 1.5 | 1.5 |
| %Phosphorus | 0.076 | 0.076 | 0.076 | 0.076 | 0.076 | 0.076 | 0.077 | 0.077 |
| %Calcium | 0.135 | 0.135 | 0.09 | 0.09 | 0.12 | 0.12 | 0.2 | 0.2 |
| %Sodium | 0 | 0 | 0.049 | 0.049 | 0 | 0 | 0 | 0 |
| %Molybdenum (ppm) | 0.02 | 0.02 | 0.02 | 0.02 | 0.02 | 0.02 | 0.04 | 0.04 |
| TB N | 7.8 | 7.9 | 7.8 | 7.9 | 7.6 | 7.6 | 7.3 | 7.3 |
| %Ash | 0.85 | 0.85 | 0.84 | 0.88 | 0.84 | 0.87 | 0.93 | 0.93 |

| | | | | | | | | |
|---|---|---|---|---|---|---|---|---|
| *1* - *All amounts shown above are in weight percent and are on an oil-free basis unless otherwise noted.* *2* - *Hindered phenol* - *Butyl 3-(3,5-ditert-butyl-4-hydroxyphenyl)propanoate* *3* - *Diaryl amine* - *mixture of nonylated and dinonylatyd diphenylamine* *4* - *Ca Detergent is one or more overbased calcium alkylbenzene sulfonic acid with TBN at least 300 and metal ratio at least 10* *5* - *Mg Detergent is one or more overbased magnesium alkylbenzene sulfonic acid with TBN at least 100* *6* - *The Additional Additives used in the examples include friction modifiers, pour point depressants, anti-foam agents, corrosion inhibitors, and includes some amount of diluent oil.* | | | | | | | | |

### Testing

Low Speed Pre-ignition events are measured in two engines, a Ford 2.0L Ecoboost engine and a GM 2.0L Ecotec. Both of these engines are turbocharged gasoline direct injection (GDI) engines. The Ford Ecoboost engine is operated at 1750 rpm and 17.0 bar BMEP. The engine is operated at these conditions for a total of 175,000 combustion cycles and LSPI events are counted. The two stages are repeated four times and the number of pre-ignition events are reported as an average.

The GM Ecotec engine is operated at 2000 rpm and 22.0 bar BMEP with an oil sump temperature of 100°C. The test consists of nine phases of 15,000 combustion cycles with each phase separated by an idle period. Thus combustion events are counted over 135,000 combustion cycles.

LSPI events are determined by monitoring peak cylinder pressure (PP) and mass fraction burn (MFB) of the fuel charge in the cylinder. When both criteria are met, it is determined that an LSPI event has occurred. The threshold for peak cylinder pressure is typically 9,000 to 10,000 kPa. The threshold for MFB is typically such that at least 2% of the fuel charge is burned late, i.e. before 5.5 degrees After Top Dead Center (ATDC). LSPI events can be reported as events per 100,000 combustion cycles, events per cycle, and/or combustion cycles per event.

**Table 4 - LSPI Testing**

| | COMP EX1 | INV EX1 | Comp EX2 | INV EX2 | Comp EX3 | INV EX3 | Comp EX4 | INV EX4 |
|---|---|---|---|---|---|---|---|---|
| Engine | GM | GM | GM | GM | GM | GM | Ford | Ford |
| PP Events | 4 | 1 | 6 | 1 | 1 | 0 | - | - |
| MFB Events | 6 | 1 | 8 | 1 | 1 | 0 | - | - |
| Total Events | 4 | 1 | 6 | 1 | 1 | 0 | 31 | 0.75 |
| Total Cycles | 135,000 | 135,000 | 135,000 | 135,000 | 135,000 | 135,000 | 175,000 | 175,000 |

The data indicates that addition of oil soluble titanium compound significantly reduces the probability of pre-ignition events occurring in GM and Ford GDi engines.

### Residual Effectiveness in Aged Lubricant

The effectiveness of the lubricating compositions described herein in reducing or inhibiting pre-ignition events may be evaluated and characterized, as described above. Residual effectiveness in reducing or inhibiting pre-ignition events may also be evaluated for lubricant compositions that have aged greater than 50 operational hours or 75 operational hours or 100 operational hours or 150 operational hours; that is, hours lubricating an operating GDi engine under simulated driving (or other simulated operational) conditions.

In one example, lubricants may be aged by operating the engine with the lubricant under conventional speeds and loads that simulate one or more driving cycles over a desired number of operational hours. To evaluate residual effectiveness in reducing or inhibiting LSPI, fresh and aged oil samples of the same formulation may be subsequently tested, as provided in the LSPI test procedures disclosed above, or otherwise in an operational engine model that replicates the load and speed conditions where LSPI events would be anticipated and detectable. The number of detected LSPI events for the fresh versus the aged oil samples may be compared to each other or to other formulations to determine the extent the lubricant retains the capacity to reduce or inhibit LSPI events after aging.

It is known that some of the materials described above may interact in the final formulation, so that the components of the final formulation may be different from those that are initially added. The products formed thereby, including the products formed upon employing lubricant composition in its intended use, may not be susceptible of easy description. Nevertheless, all such modifications and reaction products are included within the scope of the present invention.

Except in the Examples, or where otherwise explicitly indicated, all numerical quantities in this description specifying amounts of materials, reaction conditions, molecular weights, number of carbon atoms, and the like, are to be understood as modified by the word "about". Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated.

As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having predominantly hydrocarbon character. Examples of hydrocarbyl groups include:
(i) hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form a ring);
(ii) substituted hydrocarbon substituents, that is, substituents containing non-hydrocarbon groups which, in the context of this invention, do not alter the predominantly hydrocarbon nature of the substituent (e.g., halo (especially chloro and fluoro), hydroxy, alkoxy, mercapto, alkylmercapto, nitro, nitroso, and sulphoxy);
(iii) hetero substituents, that is, substituents which, while having a predominantly hydrocarbon character, in the context of this invention, contain other than carbon in a ring or chain otherwise composed of carbon atoms.

Heteroatoms include sulfur, oxygen, nitrogen, and encompass substituents as pyridyl, furyl, thienyl and imidazolyl. In general, no more than two, preferably no more than one, non-hydrocarbon substituent will be present for every ten carbon atoms in the hydrocarbyl group; typically, there will be no non-hydrocarbon substituents in the hydrocarbyl group.

While the invention has been explained in relation to its preferred embodiments, it is to be understood that various modifications thereof will become apparent to those skilled in the art upon reading the specification. Therefore, it is to be understood that the invention disclosed herein is intended to cover such modifications as fall within the scope of the appended claims.

## Claims

1. Use of an oil soluble titanium carboxylate for reducing low speed pre-ignition events in a spark-ignited direct injection internal combustion engine operated under a load with a brake mean effective pressure (BMEP) of greater than or equal to 10 bars and at speeds less than or equal to 3,000 rpm, wherein the oil-soluble titanium carboxylate compound is present in a lubricant composition comprising a base oil of lubricating viscosity, and wherein the lubricating composition further comprises a polyalkenyl succinimide dispersant in an amount from 0.5 to 4 weight % of the composition.

2. The use of claim 1, wherein the engine is fueled with a liquid hydrocarbon fuel, a liquid non-hydrocarbon fuel, or mixtures thereof.

3. The use of claim 2, wherein the engine is fueled by natural gas, liquefied petroleum gas (LPG), compressed natural gas (CNG), or mixtures thereof.

4. The use of any one of claims 1 to 3 wherein the titanium carboxylate is selected from the group consisting of titanium citrate, titanium oleate, titanium neodecanoate and blends thereof.

5. The use of any one of claims 1 to 4, wherein the lubricant composition further comprises at least one other additive selected from an ashless dispersant, a metal containing overbased detergent, a phosphorus-containing antiwear additive, a friction modifier, an antioxidant, and a polymeric viscosity modifier.

6. The use of any one of claims 1 to 5, wherein the titanium carboxylate is present in an amount to deliver to the lubricant composition from 10 to 1000 parts per million, or 20 to 500 ppm or 50 to 400 ppm or 10 to 250 ppm, by weight of titanium.

7. The use of any one of claims 1 to 6, wherein the lubricating composition comprises at least 50 weight % of a Group II base oil, a Group III base oil, or mixtures thereof.

8. The use of any one of claims 1 to 7, wherein there is a reduction in the number of LSPI events of at least 10 percent.

9. The use of any one of claims 1 to 8, wherein the low speed pre-ignition events are reduced to less than 20 LSPI events per 100,000 combustion events.

## Patentansprüche

1. Verwendung eines öllöslichen Titancarboxylats zum Reduzieren von Vorzündungsereignissen bei niedriger Drehzahl in einem funkgezündeten Verbrennungsmotor mit Direkteinspritzung, der unter einer Last mit einem effektiven Mitteldruck (BMEP) von größer als oder gleich 10 bar und bei Geschwindigkeiten kleiner als oder gleich 3.000 U/min betrieben wird, wobei die öllösliche Titancarboxylatverbindung in einer Schmiermittelzusammensetzung vorhanden ist, umfassend ein Basisöl der Schmierviskosität, und wobei die Schmierzusammensetzung ferner ein Polyalkenylsuccinimiddispergiermittel in einer Menge von zu 0,5 bis 4 Gew.-% der Zusammensetzung umfasst.

2. Verwendung nach Anspruch 1, wobei der Motor mit einem flüssigen Kohlenwasserstoffkraftstoff, einem flüssigen Nicht-Kohlenwasserstoff-Kraftstoff oder Gemischen davon angetrieben wird.

3. Verwendung nach Anspruch 2, wobei der Motor durch Erdgas, Autogas (LPG), komprimiertes Erdgas (CNG) oder Gemische davon angetrieben wird.

4. Verwendung nach einem der Ansprüche 1 bis 3, wobei das Titancarboxylat aus der Gruppe ausgewählt ist, die aus Titancitrat, Titanoleat, Titanneodecanoat und Mischungen davon besteht.

5. Verwendung nach einem der Ansprüche 1 bis 4, wobei die Schmiermittelzusammensetzung ferner mindestens einen anderen Zusatz umfasst, der aus einem aschefreien Dispergiermittel, einem metallhaltigen überbasischen Detergens, einem phosphorhaltigen Verschleißschutzzusatz, einem Reibungsminderer, einem Antioxidans und einem polymeren Viskositätsmodifizierer ausgewählt ist.

6. Verwendung nach einem der Ansprüche 1 bis 5, wobei das Titancarboxylat in einer Menge vorhanden ist, um der Schmiermittelzusammensetzung von 10 bis 1000 Teile pro Million, 20 bis 500 ppm oder 50 bis 400 ppm oder 10 bis 250 ppm nach Gewicht Titan zuzuführen.

7. Verwendung nach einem der Ansprüche 1 bis 6, wobei die Schmierzusammensetzung mindestens zu 50 Gew.-% ein Grundöl der Gruppe II, ein Grundöl der Gruppe III oder Mischungen davon umfasst.

8. Verwendung nach einem der Ansprüche 1 bis 7, wobei eine Reduktion der Anzahl von LSPI-Ereignissen um mindestens 10 Prozent stattfindet.

9. Verwendung nach einem der Ansprüche 1 bis 8, wobei die Vorzündungsereignisse bei niedriger Drehzahl auf weniger als 20 LSPI-Ereignisse pro 100.000 Verbrennungsereignisse reduziert werden.

## Revendications

1. Utilisation d'un carboxylate de titane oléosoluble destiné à réduire des événements de préallumage à bas régime dans un moteur à combustion interne à injection directe à allumage par étincelle mis en fonctionnement sous une charge avec une pression effective moyenne au frein (BMEP) supérieure ou égale à 10 bar et à des régimes inférieurs ou égaux à 3000 tr/min, le composé carboxylate de titane oléosoluble étant présent dans une composition lubrifiante comprenant une huile de base de viscosité lubrifiante, et la composition lubrifiante comprenant en outre un dispersant polyalcényl-succinimide en une quantité allant de 0,5 à 4 % en poids de la composition.

2. Utilisation selon la revendication 1, dans laquelle le moteur est alimenté par un carburant liquide hydrocarboné, un carburant liquide non hydrocarboné ou des mélanges de ceux-ci.

3. Utilisation selon la revendication 2, dans laquelle le moteur est alimenté par du gaz naturel, du gaz de pétrole liquéfié (GPL), du gaz naturel comprimé (GNC), ou des mélanges de ceux-ci.

4. Utilisation selon l'une quelconque des revendications 1 à 3 dans laquelle le carboxylate de titane est choisi dans le groupe constitué par citrate de titane, oléate de titane, néodécanoate de titane et mélanges de ceux-ci.

5. Utilisation selon l'une quelconque des revendications 1 à 4, dans laquelle la composition lubrifiante comprend en outre au moins un autre additif choisi parmi un dispersant sans cendres, un détergent surbasique contenant du métal, un additif anti-usure contenant du phosphore, un modificateur de friction, un antioxydant et un modificateur de viscosité polymère.

6. Utilisation selon l'une quelconque des revendications 1 à 5, dans laquelle le carboxylate de titane est présent en une quantité pour délivrer à la composition lubrifiante de 10 à 1000 parties par million, ou 20 à 500 ppm ou 50 à 400 ppm ou 10 à 250 ppm, en poids de titane.

7. Utilisation selon l'une quelconque des revendications 1 à 6, dans laquelle la composition lubrifiante comprend au moins 50 % en poids d'une huile de base du Groupe II, d'une huile de base du groupe III, ou de mélanges de celles-ci.

8. Utilisation selon l'une quelconque des revendications 1 à 7, dans laquelle il y a une réduction dans le nombre d'événements de préallumage à bas régime d'au moins 10 pour cent.

9. Utilisation selon l'une quelconque des revendications 1 à 8, dans laquelle les événements de préallumage à bas régime sont réduits à moins de 20 événements de préallumage à bas régime pour 100 000 événements de combustion.
